# EUROPEAN PATENT APPLICATION

(11) **EP 1 564 167 A1**
(43) Date of publication of application: **17.08.2005**
(21) Application number: 05250720.9
(22) Date of filing: 09.02.2005
(51) Int. Cl.: B65G 51/26, B65G 51/32

(54) **Air tube station**

(30) Priority: 12.02.2004 GB 0403049
(71) Applicant: Air Tube Conveyors Limited, Worcestershire DY10 4JB (GB)
(72) Inventor: Lewis, Richard c/o Air Tube Conveyors Ltd, Hartlebury Worcestershire DY10 4JB (GB)
(74) Representative: Somervell, Thomas Richard

(57) **Abstract**

A tube conveyor station, which may be a send station or a receive station or both, includes a support structure (14) having a tube connection union connected, when the station forms part of a conveyor system, to a transport tube (11) through which a carrier (12) can be conveyed to or from the station. The station further includes a carrier receptacle (21) movable relative to the support structure between a first receive or despatch position, in which the receptacle communicates with the transport tube in use, to receive a carrier from, or despatch a carrier to, the transport tube, and a second, load or unload, position remote from the first position of the receptacle and in which a carrier can be loaded into or unloaded from said receptacle. A closure member (22) is movable with the receptacle relative to the support structure and spaced from the receptacle such that it closes the open end of the transport tube when the receptacle is in its second position.

## Description

This invention relates to station assemblies for air tube conveyor systems.

The concept of an air tube conveyor system will be well understood by those skilled in the art. Briefly, an air tube conveyor system uses a flow of gas, customarily air, flowing along an elongate tube to transport a carrier from a send station to a receive station positioned at a location remote from the send station. Carriers are generally hollow, and may take a wide variety of different forms, and there are many known refinements on the very basic system described briefly above.

In accordance with the first aspect of the present invention there is provided a tube conveyor station, which may be a send station or a receive station or both, and including a support structure having a tube connection union connected, when the station forms part of a conveyor system, to a transport tube through which a carrier can be conveyed to or from said station, the station further including a carrier receptacle movable relative to said support structure between a first, receive or despatch, position in which the receptacle communicates with said transport tube in use to receive a carrier from, or despatch a carrier to, said transport tube, and a second, load or unload, position remote from said first position of the receptacle and in which a carrier can be loaded into or unloaded from said receptacle, the station still further including a closure member movable with said receptacle relative to said support structure and spaced from said receptacle such that it closes the open end of said transport tube when the receptacle is in its second position.

Preferably said closure member and said receptacle are carried on a common movable component mounted for movement relative to said support structure.

Preferably said support structure comprises a housing receiving said closure member and said receptacle, and receiving also a drive mechanism for driving the closure member and the receptacle relative to the support structure.

Conveniently said support structure includes an aperture with which said receptacle is aligned in its second position and through which a carrier can be introduced into or removed from said receptacle.

In accordance with a second aspect of the present invention there is provided a send station including a carrier receptacle movable between a first, load position in which a carrier is introduced into the receptacle, and a second, despatch position in which the carrier is despatched from the receptacle into a transport tube of the air tube conveyor system, and, a loading tube accessible at one end to an operator for the introduction of carriers, and communicating at its other end, in the first position of said receptacle, with said receptacle so that a carrier from said loading tube can enter the receptacle, said loading tube being of sufficient length between its ends to accommodate a carrier, and said station including a loading tube closure member movable with said receptacle, and closing said other end of the loading tube when said receptacle is in its second position, to prevent inadvertent loss of a carrier from the loading tube.

Preferably said loading tube is of sufficient length between its ends to accommodate a plurality of carriers positioned end-to-end.

Preferably said loading tube is orientated in relation to said receptacle that carriers in the loading tube are biased towards said receptacle under gravity.

Preferably said loading tube closure member and said receptacle are carried by a common, movable component.

Desirably said send station incorporates the integers of the stations defined above in accordance with said first aspect of the present invention.

Preferably said receptacle, said loading tube closure member and said transport tube closure member are carried by a common movable member.

In accordance with a third aspect of the present invention there is provided a station for an air tube conveyor system comprising a housing including a first component receiving an end of a transport tube and having, spaced from the transport tube, a portal structure through which carriers can be introduced, or removed, by an operator, and, the housing including a second component housing a movable receptacle for transferring carriers between the portal and the transport tube, said first and second components having respective unions which align when the first and second components are correctly inter-engaged to allow carriers to be transferred by the receptacle of the second component between the transport tube and the portal of the first component, said second component being a self-contained unit which can be detached from said first component for replacement.

Preferably said first and second components are provided with mating, sliding guides whereby said second component is a sliding fit on said first component.

Preferably said guides have associated therewith location means for arresting sliding movement of the second component relative to the first component in a position where their respective unions are aligned.

Desirably where said second component houses an electrical drive arrangement for moving the receptacle within the second component, the second component includes a wiring harness terminating in one or more plug and socket connectors for engagement with mating connectors of a continuation of the wiring harness carried by the said first component.

Preferably said first component includes means for closing said end of said transport tube when said second component is detached from said first component.

Desirably said means for closing said transport tube includes a resiliently biased closure element which moves under said bias to closed said tube end when said second component is removed.

Conveniently said station also includes integers of the stations in accordance with the first and/or second aspects of the invention defined above.

Examples of the invention will now be described with reference to the accompanying drawings wherein: -
Figure 1 is a diagrammatic sectional view of a send station of an air tube conveyor system;
Figure 2 is a diagrammatic side elevational view, partly exploded, of a send station similar to that of Figure 1;
Figure 3 is an end view of the station of Figure 2 showing two components of the station displaced vertically by comparison with their relative positioning in Figure 2.
Figure 4 is a plan view of a slide plate forming part of the station of Figure 1;
Figure 5 is a diagrammatic side elevation, with a front cover removed, of a removable housing forming part of another example of a send station, similar to that of Figure 1; and
Figures 6a to 6d are diagrams that illustrate a sequence of operation of a send station of the type shown in Figures 1 to 5.

Referring to the drawings, the send station is positioned at one end of an elongate transport tube 11 which extends to one or more remote receiving locations. The send station may, for example, be positioned at a supermarket checkout location so that the checkout operator can despatch carriers 12, containing money or credit card slips or the like, to the supermarket cash office.

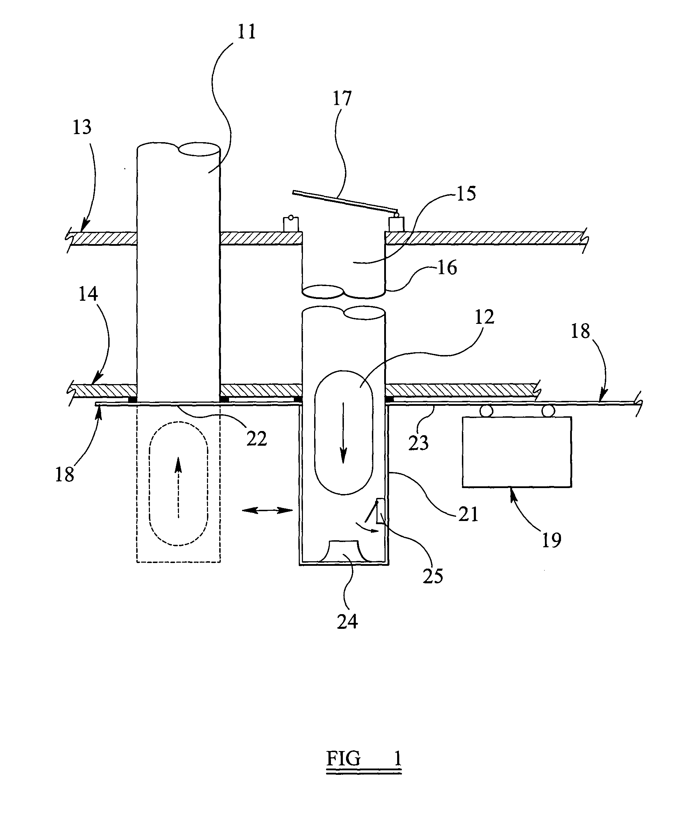

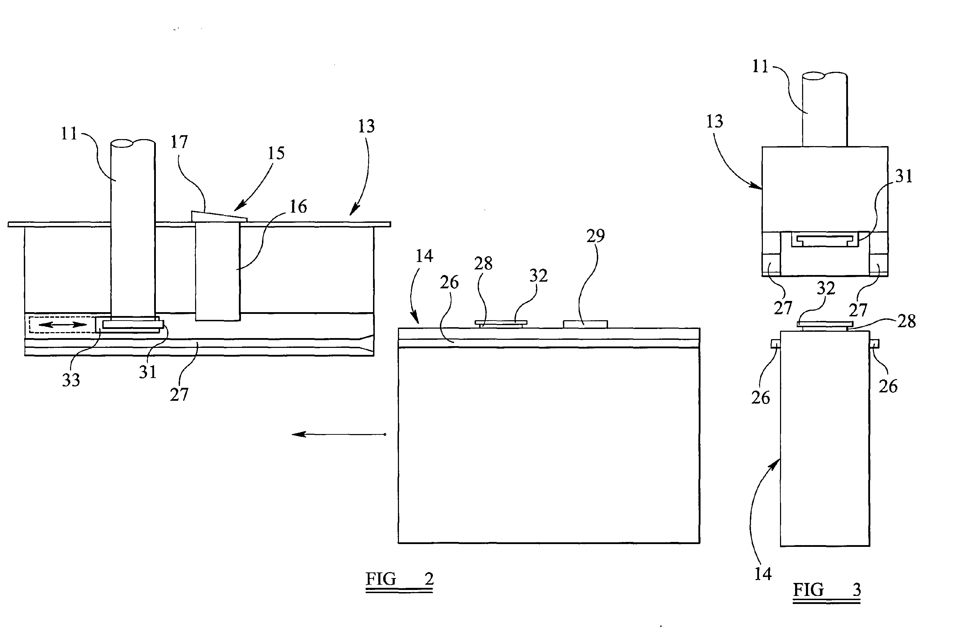

The station includes a two-part housing 13, 14, the first component 13 of which is intended to be fixed in use, and may form part of the structure of the supermarket checkout in the example where the station is used in a supermarket. There are three particular aspects to the present invention, the first and second of which are depicted more particularly in Figure 1 and the third of which is depicted more particularly in Figures 2 and 3. It is to be recognised that these three aspects of the invention are capable of use independently of one another, or in combinations with one another.

Referring first to Figure 1, the transport tube 11 extends through the wall of the housing component 13 and terminates at an aperture in the wall of the housing component 14. The housing component 14 in Figure 1 may be thought of as a support-structure. The tube 11 opens at the lower face of the support structure and where, as shown in Figure 1, the station is a send station then air will be drawn along the tube 11 from its support structure end by a remote blower assembly, the air entering the end of the tube 11 beneath the support structure 14. In the arrangement illustrated in Figure 1 it is intended that the support structure 14 within the outer housing component 13 is fixed in position. The outer housing component 13 includes an inlet portal 15 for carriers 12 including a length of circular section tube 16 similar to the transport tube 11 and extending from the outer face of the housing component 13 to the lower face of the support structure 14. A closure flap 17 of known form closes the upper, outer end of the portal 15.

Beneath the support structure 14 there is mounted a slide plate 18 which is reciprocable between first and second positions by an electric drive arrangement 19. Conveniently the reciprocatory path of the slide plate 18 is rectilinear, although it is not essential that this is the case, and there may be applications in which a curved reciptrocatory path would be preferred. Intermediate its ends the slide plate 18 is formed with an aperture the diameter of which is substantially equal to the diameter of the tubes 11, 16. Carried by the guide plate 18, and preferably forming an integral part of the guide plate 18, is a cylindrical closed ended receptacle 21 extending downwardly from the guide plate 18 beneath the circular aperture of the guide plate 18, the closed end of the receptacle being perforated to allow a flow of air to be drawn therethrough in use as will be described in more detail hereinafter.

At one end of its reciprocatory travel, the position of the slide plate 18 is such that the receptacle 21 is aligned with the tube 16 and so can receive a carrier 12 introduced into the tube 16 after opening the flap 17. The slide plate 18 on either side of the receptacle 21 defines first and second closure members 22, 23. In the first position of the slide plate 18, where the receptacle 21 receives carriers 12 from the tube 16, the first closure member 22 lies across the open end of the tube 11, or the lower open end of the union in the support structure 14 which connects to the tube 11. In Figure 1 there is shown a ring seal around the open end of the tube 11, the ring seal being attached to the lower face of the support structure 14. Thus when the receptacle 21 is receiving a carrier 12 from the carrier portal 15 the flow of air into the tube 11 through its open end is prevented by the closure member 22. While the use of a seal is indicated in Figure 1 it will be understood that it may be preferred to have the slide plate 18 in facial sliding engagement with the lower face of the support member 14 thus rendering the provision of an additional seal unnecessary.

Operation of the drive unit 19 to move the slide plate 18 to the left (to the left in Figure 1) moves the receptacle 21 to the position shown in broken lines in Figure 1. Thus the slide plate 18 is moved to align the receptacle 21 with the tube 11, so that the open top end of the receptacle 21 becomes continuous with the open lower end of the tube 11. The perforations in the lower wall of the receptacle 21 allow air to flow through the receptacle from the lower end of the receptacle and into the aligned tube 11 so that the flow of air can carry the conveyor 12 from the receptacle upwardly into the tube 11, to be conveyed along the length of the tube.

It will be understood that the carriers 12 in Figure 1 are shown highly diagrammatically. In particular, substantial clearance is indicated between the outer cylindrical wall of each carrier and the inner cylindrical wall of the tube 11. Such clearance does not exist in use, and as will be well understood by those skilled in the art the carriers 12 have one or more sliding seal members which provide a low friction sliding seal between the carrier and the inner surface of the tube 11 and the receptacle 21 so that the air flow along the tube can carry the carrier with it.

In the second position of the slide plate 18 where the receptacle 21 is aligned with the tube 11, the second closure member 23 closes the lower end of the tube 16 so that should a further carrier be introduced by way of the flap 17 then it will not drop through the support 14 and into the lower regions of the housing, but instead will be arrested within the tube 16 by the closure member 23. Subsequent return of the receptacle 21 by moving the slide plate back to its first position opens the lower end of the tube 16 to allow any carrier which may have been supported on the closure member 23 to migrate into the receptacle 21.

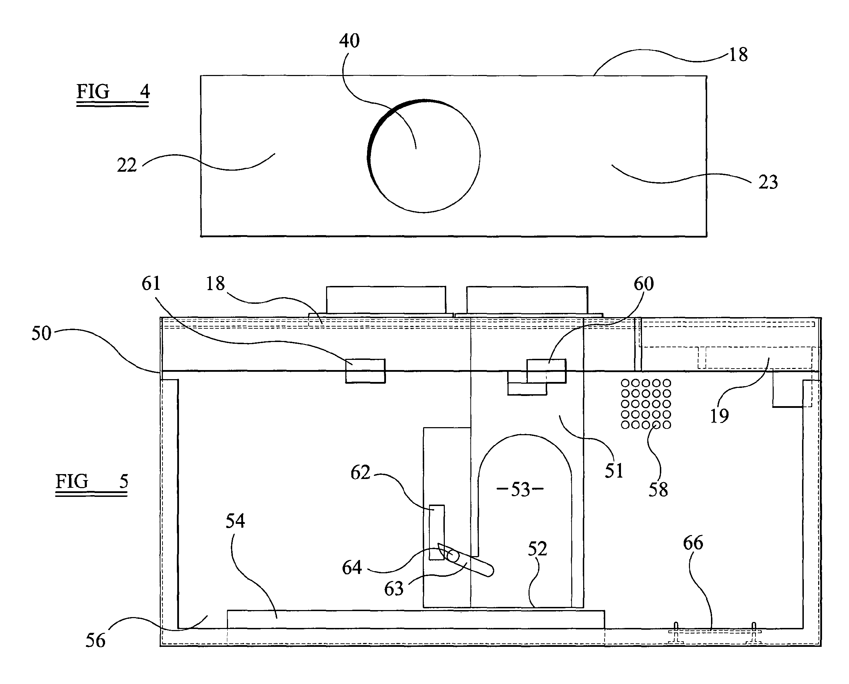

Figure 4 is a plan view of the slide plate 18 showing an aperture 40 that opens into the receptacle 21 of Figure 1. When the slide plate 18 is in the first, load position, the aperture 40 allows a carrier to drop into the receptacle. When the slide plate 18 is moved to the second, send position, the aperture 40 allows the carrier to be drawn into the air tube conveyor system. When the slide plate 18 is in the load position, the first closure member 22 of the slide plate 18 is positioned to seal the air tube conveyor system. When in the send position, the second closure member 23 of the slide plate 18 prevents further carriers from dropping into the receptacle.

Referring again to Figure 1, it will be noted that the receptacle 21 is provided internally with a stop or buffer 24 to cushion the impact of a carrier against the closed lower end of the receptacle 21. Additionally the receptacle 21 houses a carrier detector 25 in the form of a micro-switch or other suitable sensing device which is actuated when a carrier 12 is received within the receptacle 21 and seated on the buffer 24. As will be well understood by those skilled in the art the micro-switch 25 closes as a carrier 12 is received in the receiver 21 for transfer to the tube 11, the micro-switch supplying a signal to the system control arrangement that a carrier is ready for transport. At a predetermined point after the micro-switch 25 has closed to supply the signal to the control arrangement the control arrangement will initiate the drive 19 to move the receptacle 21 into alignment with the tube 11.

The length of the tube 16 between the carrier inlet portal 15 and the closure plate 23 is sufficient to house at least one carrier 12 and preferably long enough to receive two or more carriers 12 positioned end-to-end. It will be recognised therefore that an operator can feed carriers as necessary into the tube 16 but the station will send only one carrier at a time. When the receptacle 21 is positioned beneath the tube 16 only a single carrier can enter the receptacle 21, the abutting end of that carrier, and the adjacent carrier above, being generally aligned with the plane of the closure member 23 so that as the plate 18 is moved and the closure member 23 closes the lower end of the tube 16, carriers above the carrier housed within the receptacle 21 are supported by the closure member 23. The height of the buffer 24 in the receptacle 21 is adjustable to permit setting of the system to operate with carriers of particular lengths, it being recognised that irrespective of the carrier length chosen a carrier in the receptacle should have its upper end adjacent the upper end of the receptacle so that the closure member 23 can pass between the carrier in the receptacle and the next adjacent carrier above in the tube 16.

When the receptacle is again returned to the position shown in Figure 1 the next carrier in line in the tube drops into the receptacle for transport. It will be recognised therefore that it is not necessary for the operator to determine whether or not a previous carrier has been despatched before introducing a further carrier into the tube 16. The tube 16, together with the closure member 23 provide a storage and sequencing arrangement for a plurality of carriers.

While it is highly desirable that the elongate tube 16, capable of receiving a plurality of carriers, is used in conjunction with the arrangement of the plate 18 incorporating the receptacle 21 and closure members 22, 23, it is to be understood that an elongate storage/supply tube 16 could be used with other carrier transfer arrangements. Similarly the arrangement of the plate 18 incorporating the receptacle 21 and closure members 22, 23 does not specifically require the use of an elongate tube 16 capable of storing a plurality of carriers 12 for despatch, and could, for example, be used in an arrangement where, as is usual, carriers are inserted singly into the receptacle through an aperture in a countertop or the like.

Although the station described in Figure 1 is described with reference to a send station it is possible that with minor changes the station could be a receiving station. A carrier received along the tube 11 would be seated on the closure member 22 until the receptacle 21 is positioned in alignment with the tube 11 where upon the carrier would fall into the tube 11 and would then be transported laterally by returning the receptacle 21 to the position shown in Figure 1 where the carrier could be extracted from the receptacle in any convenient manner. For example, it would be possible to provide a means for discharging the carrier from the receptacle 21 upwardly so that the carrier is presented, protruding from the housing component 13, for access to an operator. Alternatively means could be provided for an opening in the wall or bottom of the receptacle 21 through which the carrier 12 can be discharged for return to the operator through an alternative route.

In a conventional air tube conveyor system of the kind frequently installed in supermarkets, the carriers are inserted singly, directly into the tube 11 or a continuation thereof. A sliding closure member, electrically driven, is usually provided in the tube 11 above the checkout location of the supermarket, and conveniently just below ceiling level, the closure member being opened to allow despatch of the carrier introduced into the tube 11. The arrangement described above with reference to Figure 1 is greatly advantageous over such a conventional system firstly in that the closure member of the tube 11 is incorporated into the plate 18, and so is beneath the checkout area, and secondly in that the tube 16 can receive a number of carriers for despatch, and it is not necessary for the operator to determine that a previous carrier has actually been transported through the tube 11 before introducing a subsequent carrier for despatch. Also, mounting of the station below the checkout removes the need for high access equipment, such as ladders or a scissors lift, to carry out service or maintenance work, and safety of service/maintenance personnel is improved.

In a conventional arrangement if a fault arises in a station at, for example, a supermarket checkout it is usually necessary to take the checkout position out of service, for dismantling of part of the tube system and/or the send/receive station for repair. Figures 2 and 3 illustrate a station arrangement in which this problem is obviated. Figures 2 and 3 illustrate that the station is defined by first and second inter-engaging housing components 13, 14 the housing component 13 being a fixture at, for example, the checkout location of the supermarket. The component 13 receives the end region of the tube 11, and the tube 16 and flap arrangement 17 of the carrier inlet portal 15. The tubes 11 and 16 terminate, in open ends, within the housing component 13 at substantially the same level. The housing component 14 supports and receives the plate 18, the drive arrangement 19 and ancillary control components, and the housing component 14 has, extending along the upper regions of its opposite longitudinal side walls, longitudinally extending guide ribs 26 which can be slidably received in corresponding guide grooves 27 formed in the inner mutually presented faces of opposite longitudinal side walls of the housing component 13. Thus the housing component 14 can be received as a slidably unit in the housing component 13. The grooves 27 are closed at one end (not shown) to limit the insertion of the component 14 into the component 13, and in the limit position the tube 16 is aligned, at its lower end, with an aperture in the top wall of the housing component 14 beneath which aperture the receptacle 21 is positioned in its rest position. Simultaneously the open lower end of the tube 11 aligns with an aperture in the top wall of the component 14, with which the receptacle 21 is aligned in its second position.

In effect the apertures in the upper wall of the housing component 14, with which the tubes 11, 16 align, define unions through which the tubes 11, 16 are connected to the interior of the housing component 14. However, preferably, as shown in Figures 2 and 3 the housing component 14 is provided with upstanding short cylindrical spigots 28, 29 which align with the tubes 11, 16 respectively to define the connection unions. Generally there is no airflow in the tube 16, and so there is no need to seal the union of the tube 16 with the housing component 14. Thus the lower end of the tube 16 can simply overly, and preferably abut, the open upper end of the spigot 29. However, in order to minimise air leakage in relation to the tube 11 it is preferred to provide an interconnection between the spigot 28 and the end of the tube 11. As is seen most clearly in Figure 3 the lower end of the tube 11 is provided with an internally grooved skirt 31, the internal re-entrant groove of the skirt 31 being U-shaped when viewed in plan. The free end of the spigot 28 is provided with an outwardly extending peripheral collar 32, and the positioning of the internal groove of the skirt 31 and the collar 32 is such that the collar 32 enters the groove of the skirt 31 as the housing component 14 is slid into place in the housing component 13. The inter-engagement of the collar 32 and skirt 31 provides a relatively close fit between the spigot 28 and the tube 11 minimising leakage of air into the tube 11 through the interface of the tube 11 and the spigot 28 as air is drawn into the tube 11 through the receptacle 21 to transport a carrier 12 into the tube in use.

It will be recognised that the lower or other source of reduced pressure in the tube system, which generates the flow of air through the tube system to carry carriers along the tube system, may serve more than one tube 11. Thus it is undesirable to leave a tube 11 open at any time during operation of the system, since free flow of air into an open tube 11 can impair the operation of other transport tubes whose air flow is generated by the same blower. In the embodiment described above it will be recognised that the end of the tube 11 is open during replacement of a housing component 14. In order to overcome this difficulty the skirt 31 of the tube 11 is provided with a closure assembly including a sliding closure element 33. Desirably the closure element 33 is spring or otherwise biased, towards a position in which it closes the end of the tube 11 at the skirt 31. In Figure 2 the closure element 33 shown in its operative position (in full lines) and a retracted position of the closure element 33 is shown in broken lines in Figure 2.

The arrangement of the element 33 is such that as the housing component 14 is retracted from the component 13 the collar 32 disengages from the skirt 31 and simultaneously the closure element 33 follows the collar 32 and in so doing closes the open end of the tube 11. Conversely, as a housing component 14 is introduced into the housing component 13 the collar 32 engaging the element 33 as the collar 32 enters the skirt 31, pushes the element 33 against its spring bias to its retracted position so that the tube 11 communicates with the spigot 28.

It will be recognised that other closure arrangements for the tube 11 can be provided. An electrically driven closure element 33 could be provided, the drive to the element 33 being controlled by switches or sensors operated by the presence of the housing component 14 within the housing component 13.

Electric leads for providing power to the drive arrangement 19, and electric control leads from the drive arrangement 19 and the micro-switch 25 form a wiring harness internally of the housing component 14. The wiring harness can, if desired, terminate on an external wall of the component 14 as one part of a plug and socket connector, the other part of which is carried on a harness continuation in the housing component 13, and extending from the housing component 13 as necessary to the power supply and control arrangement of the conveyor system. If desired the plug and socket connector parts can be arranged to mate automatically only when the housing component 14 is properly orientated within the housing component 13.

It will be recognised that a fault in the station is almost certain to be a fault within the parts of the housing component 14, since there is no part which is likely to fail, or need servicing, in the housing component 13. Thus it is a very simple matter to detach a faulty housing component 14 from the housing component 13 and replace it with an equivalent one from store, so that the checkout location is out of service for an absolute minimum of time.

While it is preferable for the housing component arrangement 13, 14 illustrated in Figures 2 and 3 to make use of the elongate tube 16 and the slide plate 18 arrangement described above, it is to be understood that the two-part housing arrangement can be used with other station constructions.

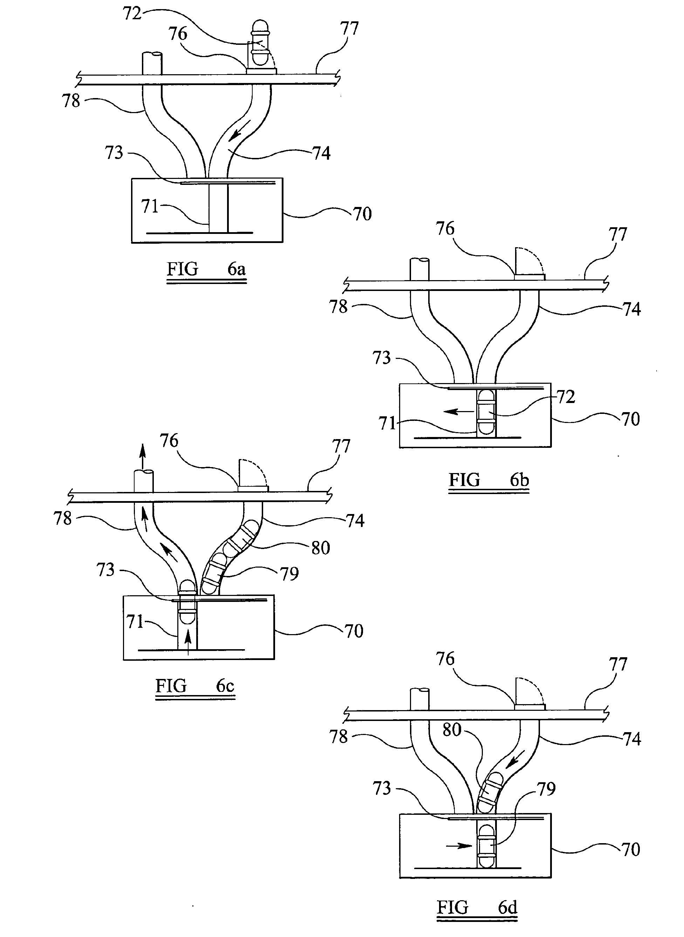

The receptacle 21 described above and shown in Figure 1 is closed at its lower end by a perforated lower wall, and the height of the stop or buffer 24 is adjustable in the case where the receptacle is used with a storage tube 16 for receiving one or more additional carriers. Figure 5 shows an alternative arrangement having a receptacle 51 with a lower end 52, which is completely open. The receptacle 51 is mounted in a removable housing 50, in a similar manner to that described above in relation to Figures 2 and 3.

A support rib or ramp 54 is attached to a fixed, inner or lower wall 56 of the housing 50 beneath the receptacle 51. The rib or ramp 54 is spaced from the open lower end 52 of the receptacle 51 and is elongate. The rib or ramp 54 intersects the longitudinal axis of the receptacle 51 and extends along the path of movement of the receptacle 51 so that throughout the whole range of movement of the receptacle 51 the rib or ramp 54 lies beneath the centre line of the receptacle 51. The height of the rib or ramp 54 is so chosen in relation to the length of the receptacle 51 that a carrier entering the receptacle protrudes from the lower end and is arrested by the ramp 54, the upper end of the carrier being aligned with, or just below, the plane of the open top end of the receptacle 51. Thus throughout the whole traverse of the receptacle 51 the lower end of the carrier slides on the rib or ramp 54. Should there be a desire to use the system with carriers of a different length then a ramp or rib of a different height can easily and quickly be substituted to ensure that a carrier is always positioned within the receptacle 51 with its upper end aligned with the plane of the open top end of the receptacle 51. Alternatively, the rib or ramp 54 may be affixed with fasteners that allow the height of the ramp 54 to be adjusted.

The use of an open ended receptacle and a fixed rib or ramp has the advantage that foreign objects accidentally entering the receptacle from the inlet portal can, unless they are extremely large, simply fall from the open end of the receptacle to one side or other of the rib or ramp and will not impede operation of the system.

The housing 50 shown in Figure 5 has had a front cover removed to reveal the details of the internal components. In use the removeable front cover is attached so that the housing 50 forms an enclosure. Openings 58 are provided in a rear wall of the housing 50 to allow air to be drawn in when the air tube conveyor system draws in air to send a carrier into the system. The front cover is preferably locked onto the housing 50 using a suitable locking arrangement (not shown) to prevent unauthorised access. In case a carrier should be lodged inside the receptacle 51, when an authorised person removes the front cover the carrier can be retrieved because the receptacle 51 is provided with a cut-out region 53. The housing 50 is also preferably provided with a sensor (not shown) that serves to remove power supplied to the motor 19 when the front cover is removed. Power to the station is maintained to facilitate fault finding, but removal of power to the motor prevents movement of the components to prevent the possibility of injury to service personnel.

Also shown in Figure 5, are a pair of position sensors 60, 61 that are used to provide a position signal to indicate that the receptacle 51 is in the first, loading position (sensor 60) or in the second, send position (sensor 61). The signals are used to control operation of the motor 19.

Also shown in Figure 5 is an alternative detector 62 for providing a signal to indicate when a carrier has entered the receptacle 51. A latch member 63 is mounted on a pivot 64. When a carrier enters the receptacle 51 the latch member 63 is moved about the pivot 64 and the detector 62 detects this movement. The detector 62 may be a contact or non-contacing proximity sensing device.

A printed circuit board 66 is mounted within the housing 50 to carry the electronic components and circuitry that make up the station controls.

The sequence of operations of a send station 70 is shown diagrammatically in Figures 6a to 6d. In Figure 6a the station is in the load position with a receptacle 71 waiting to receive a carrier. In this position an aperture (not shown) in a slide plate 73 is directly between a load tube 74 and the receptacle 71. A carrier 72 is inserted into the load tube 74 through a portal 76 in, for example, a checkout counter 77 of a supermarket.

As shown in Figure 6b the carrier has dropped into the receptacle 71. This is detected by a detector (not shown), which triggers the send station 70 to move the receptacle 71 across from the load position to the send position.

As shown in Figure 6c, when the receptacle has reached the send position, the air flow in the air tube conveyor system draws the carrier 72 up through a send tube 78. While this occurs, more carriers 79, 80 can be loaded into the load tube 74, but these are prevented from dropping below the slide plate 73.

After the carrier 72 has been sent, the receptacle 71 and slide plate 73 are returned back to the load position, as shown in Figure 6d. In this position the slide plate 73 seals the end of the send tube 78. The next carrier 79 then drops into the receptacle 71, and the procedure of Figures 6b and 6c is repeated.

## Claims

1. A tube conveyor station, which may be a send station or a receive station or both, and including a support structure (14) having a tube connection union connected, when the station forms part of a conveyor system, to a transport tube (11) through which a carrier (12) can be conveyed to or from said station, the station further including:
a carrier receptacle (21) movable relative to said support structure (14) between a first receive or despatch position, in which the receptacle (21) communicates with said transport tube (11) in use, to receive a carrier from, or despatch a carrier to, said transport tube, and a second, load or unload, position remote from said first position of the receptacle and in which a carrier (12) can be loaded into or unloaded from said receptacle (21); and
a closure member (22) movable with said receptacle (21) relative to said support structure (14) and spaced from said receptacle (21) such that it closes the open end of said transport tube (11) when the receptacle is in its second position.

2. A tube conveyor station according to claim 1 wherein said closure member (22) and said receptacle (21) are carried on a common movable component mounted for movement relative to said support structure (14).

3. A tube conveyor station according to claim 1 or claim 2 wherein said support structure (14) comprises a housing receiving said closure member (22) and said receptacle (21), and receiving also a drive mechanism (19) for driving the closure member (22) and the receptacle (21) relative to the support structure (14).

4. A tube conveyor station according to any preceding claim wherein said support structure (14) includes an aperture (40) with which said receptacle (21) is aligned in its second position and through which a carrier (12) can be introduced into or removed from said receptacle (21).

5. A send station including:
a carrier receptacle (21) movable between a first, load position in which a carrier (12) is introduced into the receptacle, and a second, despatch position in which the carrier is despatched from the receptacle into a transport tube (11) of the air tube conveyor system;
a loading tube(16) accessible at one end to an operator for the introduction of carriers, and communicating at its other end, in the first position of said receptacle (21), with said receptacle so that a carrier (12) from said loading tube (16) can enter the receptacle (21), said loading tube (16) being of sufficient length between its ends to accommodate a carrier (12); and
a loading tube closure member (23) movable with said receptacle (21), and closing said other end of the loading tube (16) when said receptacle is in its second position, to prevent inadvertent loss of a carrier from the loading tube (16).

6. A send station according to claim 5 wherein said loading tube (16) is of sufficient length between its ends to accommodate a plurality of carriers positioned end-to-end.

7. A send station according to claim 6 wherein said loading tube (16) is orientated in relation to said receptacle (21) such that carriers in the loading tube (16) are biased towards said receptacle under gravity.

8. A send station according to any one of claims 5 to 7 wherein said loading tube closure member (23) and said receptacle (21) are carried by a common, movable component.

9. A send station according to any one of claims 5 to 8 incorporating the integers of the stations defined in accordance with any one of claims 1 to 4.

10. A send station according to any one of claims 5 to 9, wherein said receptacle (21), said loading tube closure member (22) and said transport tube closure member (23) are carried by a common movable member.

11. A station for an air tube conveyor system comprising a housing including a first component (13) receiving an end of a transport tube (11) and having, spaced from the transport tube (11), a portal structure (15) through which carriers (12) can be introduced or removed by an operator, the housing (14) including a second component (14) housing a movable receptacle (21) for transferring carriers between the portal (15) and the transport tube (11), said first and second components having respective unions (28, 29) which align when the first and second components are correctly inter-engaged to allow carriers to be transferred by the receptacle (21) of the second component (14) between the transport tube (11) and the portal (15) of the first component (13), said second component (14) being a self-contained unit which can be detached from said first component (13) for replacement.

12. A station according to claim 11 wherein said first and second components are provided with mating, sliding guides (26, 27) whereby said second component (14) is a sliding fit on said first component (13).

13. A station according to claim 12 wherein said guides (26, 27) have associated therewith location means for arresting sliding movement of the second component relative to the first component in a position where their respective unions (28, 29) are aligned.

14. A station according to any one of claims 11 to 13, wherein said second component (14) houses an electrical drive arrangement (19) for moving the receptacle within the second component, said second component includes a wiring harness terminating in one or more plug and socket connectors for engagement with mating connectors of a continuation of the wiring harness carried by the said first component (13).

15. A station according to any one of claims 11 to 14 wherein said first component (13) includes means (31, 33) for closing said end of said transport tube (11) when said second component (14) is detached from said first component (13).

16. A station according to any one of claims 11 to 15 wherein said means for closing said transport tube includes a resiliently biased closure element (33) which moves under said bias to closed said tube end when said second component (14) is removed.

17. A station according to any one of claims 11 to 16, including integers of the stations of any one of claims 1 to 10.
